(19) Europäisches Patentamt
European Patent Office
Office européen des brevets

(11) Veröffentlichungsnummer : **0 042 505**
**B1**

(12) **EUROPÄISCHE PATENTSCHRIFT**

(45) Veröffentlichungstag der Patentschrift : **11.04.84**

(51) Int. Cl.³ : **C 08 G 65/28**, C 08 G 65/32, C 08 G 18/48

(21) Anmeldenummer : **81104202.7**

(22) Anmeldetag : **02.06.81**

(54) **Verfahren zur Herstellung von Polymerisaten mit mindestens einer endständigen primären Hydroxylgruppe.**

(30) Priorität : **20.06.80 DE 3023059**
**10.02.81 DE 3049746**

(43) Veröffentlichungstag der Anmeldung : **30.12.81 Patentblatt 81/52**

(45) Bekanntmachung des Hinweises auf die Patenterteilung : **11.04.84 Patentblatt 84/15**

(84) Benannte Vertragsstaaten : **AT BE CH DE FR GB IT LI LU NL SE**

(56) Entgegenhaltungen :
**DE-A- 2 136 572**
**GB-A- 2 020 702**
**US-A- 3 278 457**
**TENSIDE DETERGENTS, Band 17, Nr. 2, März/April 1980, München K. OPPENLÄNDER et al. "Tenside für die Tertiärförderung von Erdöl in hochsalinaren Systemen - Kriterien für die Tensidauswahl und Anwendungstechnik" Seiten 57 bis 67**

(73) Patentinhaber : **Th. Goldschmidt AG**
**Goldschmidtstrasse 100 Postfach 101461**
**D-4300 Essen 1 (DE)**

(72) Erfinder : **Esselborn, Eberhard**
**Pilotystrasse 21**
**D-4300 Essen (DE)**
Erfinder : **Fock, Jürgen, Dr.**
**Mörsenbroicher Weg 114**
**D-4000 Düsseldorf 30 (DE)**
Erfinder : **Lidy, Werner, Dr.**
**Untere Strasse 37**
**D-6903 Neckargemünd (DE)**

**EP 0 042 505 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

# Verfahren zur Herstellung von Polymerisaten mit mindestens einer endständigen primären Hydroxylgruppe

Die Erfindung betrifft ein Verfahren zur Herstellung von Derivaten von Polymerisaten der Struktureinheit

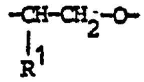

wobei

$R^1$ eine gegebenenfalls halogenierte Kohlenwasserstoffgruppe mit 1 bis 30 Kohlenstoffatomen oder die Gruppe $—CH_2—O—R^2$, in der

$R^2$ eine Alkyl- oder Alkenylgruppe ist, bedeutet, mit mindestens einer endständigen primären Hydroxylgruppe.

Bei der Anlagerung von Äthylenoxid an Verbindungen mit acidem Wasserstoff entstehen Polymerisationsprodukte mit endständigen primären Hydroxylgruppen, die weiteren Reaktionen leicht zugänglich sind. Verwendet man jedoch Oxirane der Formel

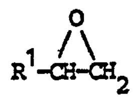

(I)

wobei $R^1$ wie oben definiert ist, entstehen Polymerisationsprodukte, welche vorwiegend sekundäre Hydroxylgruppen aufweisen. Das einfachste bekannte Oxiran dieser Formel ist Propylenoxid ($R^1 = CH_3$). Verglichen mit Polyäthylenoxiden haben die Polypropylenoxide den Vorteil größerer Hydrophobie und werden deshalb für verschiedene Anwendungsgebiete, z. B. für die Herstellung spezieller Polyurethanschaumstoffe, bevorzugt werden. Die sekundären Hydroxylgruppen sind jedoch deutlich weniger reaktiv als die primären Hydroxylgruppen. So verhält sich beispielsweise die Reaktivität von primären Hydroxylgruppen mit Isocyanaten im Vergleich zu sekundären Hydroxylgruppen mit Isocyanaten wie 1 : 0,3. Diese verringerte Reaktionsfähigkeit macht sich insbesondere dann störend bemerkbar, wenn bei der Umsetzung derartiger Polymerisationsprodukte mit sekundären Hydroxylgruppen mit Isocyanaten gleichzeitig auch Verbindungen mit primären Hydroxylgruppen umgesetzt werden. Diese primären Hydroxylgruppen reagieren bevorzugt mit den Isocyanaten. Es kommt deshalb zur Bildung von Homopolymerisaten anstelle von Heteropolymerisaten mit statistisch geregeltem Aufbau. Im Extremfalle können sich die Verbindungen mit sekundären Hydroxylgruppen ganz der Umsetzung entziehen. Hierdurch werden die anwendungstechnischen Eigenschaften der Produkte natürlich verschlechtert, da derartige, nicht umgesetzte Verbindungen z. B. als Weichmacher fungieren können, in den Polymerisaten wandern und die bekannten Ausschwitzeffekte zeigen können. Entsprechend werden auch die physikalischen Eigenschaften der Polymerisate beeinträchtigt. Zugfestigkeit und Dehnbarkeit der Polymerisate als Beispiele solcher Eigenschaften sind stark herabgesetzt.

Da Oxirane der obengenannten Formel I aber in Form ihrer Polymerisate sehr erwünschte anwendungstechnische Eigenschaften aufweisen, besteht der Wunsch und die Aufgabe, diese Polymerisate in eine Form zu überführen, in der ihre Reaktivität gesteigert ist. Es besteht insbesondere das Bedürfnis, Polymerisate derartiger Oxirane herzustellen, welche mindestens eine primäre Hydroxylgruppe aufweisen.

Man hat bereits versucht, z. B. an Polymerisate des Propylenoxids endständig Äthylenoxid anzulagern, um auf diese Art am Ende der Kette des Polymerisates Einheiten mit primären Hydroxylgruppen zu bilden. Derartige Produkte sind auch im Handel erhältlich. Sie haben jedoch den Nachteil, daß durch die zusätzliche Anlagerung des Äthylenoxids die Produkte hydrophiler werden und außerdem eine Homopolymerisation des Äthylenoxids konkurrierend erfolgen kann, so daß immer nur ein Teil des Äthylenoxids an die Kette des Propylenoxids angelagert wird und durch die zusätzliche Anwesenheit des Polyäthylenoxids die anwendungstechnischen Eigenschaften weiter beeinträchtigt werden. Hierdurch kann somit die der Erfindung zugrunde liegende Aufgabe nicht gelöst werden.

Überraschenderweise hat sich nunmehr gezeigt, daß diese Aufgabe in einfacher Weise durch das erfindungsgemäße Verfahren gelöst werden kann.

Dieses ist dadurch gekennzeichnet, daß man ein Oxiran der allgemeinen Formel

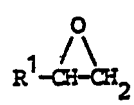

(I)

wobei $R^1$ die obengenannte Bedeutung hat, in an sich bekannter Weise an einen mindestens drei

Hydroxylgruppen aufweisenden mehrwertigen Alkohol, von dem mindestens zwei Hydroxylgruppen in Form eines Actals oder Ketals vorliegen und mindestens eine dieser beiden Hydroxylgruppen eine primäre Hydroxylgruppe ist, anlagert und die Acetal- oder Ketalgruppe nach der Anlagerung in an sich bekannter Weise durch Einwirkung von Säure spaltet.

Die Gruppe $R^1$ kann eine Alkylgruppe mit 1 bis 30 Kohlenstoffatomen sein. Bevorzugt ist $R^1$ eine Alkylgruppe mit 1 bis 4, insbesondere 1 bis 2, Kohlenstoffatomen. Ist $R^1$ eine Methylgruppe, handelt es sich um Propylenoxid. Die Alkylgruppe kann gegebenenfalls halogeniert sein und z. B. Chlorreste aufweisen. Beispiel einer solchen halogenierten Gruppe $R^1$ ist die $CH_2Cl$-Gruppe. Die Alkylgruppe kann auch ungesättigt sein. Beispiel einer solchen ungesättigten Alkylgruppe ist die Vinyl- oder Allylgruppe.

Die Gruppe $R^1$ kann auch eine Phenylgruppe, die gegebenenfalls substituiert ist, sein. Im einfachsten Falle handelt es sich bei dem Oxiran dann um Styroloxid.

Die Gruppe $R^1$ kann auch die Bedeutung der Gruppe $—CH_2—O—R^2$ haben, wobei $R^2$ eine Alkyl- oder Alkenylgruppe ist. Beispiel einer geeigneten Alkylgruppe ist die Butylgruppe; Beispiel einer geeigneten Alkenylgruppe ist die Vinyl- oder Allylgruppe.

Innerhalb des Polymerisats kann die Bedeutung der Gruppe $R^1$ gleich oder verschieden sein. So kann beispielsweise ein Polymerisat aus Struktureinheiten aufgebaut sein, bei denen $R^1$ die Bedeutung einer Methylgruppe hat sowie aus anderen Struktureinheiten, bei denen $R^1$ die Bedeutung der Gruppe $CH_2OR^2$, in der $R^2$ eine Vinylgruppe ist, hat. Selbstverständlich sind auch alle anderen Kombinationen möglich; sie werden im wesentlichen von den Eigenschaften bestimmt, die das herzustellende Polymerisat aufweisen soll.

Die Anlagerung der Oxirane der allgemeinen Formel I erfolgt an Alkohole mit mindestens drei Hydroxylgruppen, von denen mindestens zwei Hydroxylgruppen in Form eines Acetals oder Ketals vorliegen. Mindestens eine dieser beiden Hydroxylgruppen muß eine primäre Hydroxylgruppe sein. Beispiele derartiger Alkohole sind: Glycerin, Pentaerythrit, Pentite (Arabit, Adonit, Xylit), Hexite (Sorbit, Mannit, Dulcit).

Die Acetale bzw. Ketale können aus den zugrunde liegenden Alkoholen in einfacher Weise durch Umsetzung mit Aldehyden, wie Formaldehyd, Acetaldehyd, n-Butyraldehyd, iso-Butyraldehyd, n-Valeraldehyd, iso-Valeraldehyd, n-Caproaldehyd, n-Heptaldehyd, Stearaldehyd, Acrolein, Crotonaldehyd, Benzaldehyd, Furfurol, oder Ketonen, wie Methyläthylketon, Methylpropylketon, Diäthylketon, Hexanon, Methylisobutylketon, Dipropylketon, Diisopropylketon, Di-n-butylketon, Diisobutylketon, Stearon, Chloraceton, Dichloraceton, Cyclohexanon, Phoron, Benzophenon, Acetophenon, hergestellt werden.

Von den aus den genannten mehrwertigen Alkoholen und Ketonen erhaltenen Verbindungen ist insbesondere das 2,2-Dimethyl-1,3-dioxolan-4-methanol bevorzugt.

Die Anlagerung erfolgt in an sich bekannter Weise mit Katalysatoren, welche den Acetal- oder Ketalring nicht aufspalten. Es verbietet sich somit die Verwendung saurer Katalysatoren. Die Anlagerung gelingt deshalb unter Verwendung der für derartige Anlagerungsreaktionen bekannten basischen Katalysatoren, wie z. B. Natriumhydroxid, Kaliumhydroxid, Calciumhydroxid, Magnesiumhydroxid sowie deren Alkoholate, insbesondere deren Methanolate. Zur Herstellung von Polymerisationsprodukten besonders hohen Molekulargewichtes haben sich die aus den US-Patentschriften 3 278 457, 3 278 458 und 3 278 459 bekannten Doppelmetallcyanatkomplexkatalysatoren besonders bewährt. Beispiele derartiger Katalysatoren sind Komplexverbindungen, insbesondere Zn-hexacyano-ferrat(III), Zn-hexacyano-ferrit(II), Ni(II)-hexacyano-ferrat(II), Ni(III)-hexacyano-ferrat(III), Zn-hexacyano-ferrat(III)-hydrat, Co(II)-hexacyano-ferrat(III), Ni(II)-hexacyano-ferrat(III)-hydrat, Fe(II)-hexacyano-ferrat(III), Co(II)-hexacyano-cobaltat(III), Zn-hexacyano-cobaltat(III)-hydrat, die mit einem im wesentlichen wasserlöslichen, gesättigten, acyclischen, aliphatischen Polyäther komplexiert sind, der frei von aktiven Wasserstoffatomen ist und ein Molekulargewicht bis zu etwa 400 aufweist.

Nach Anlagerung der gewünschten Oxiranmenge und Erreichen des geforderten Molekulargewichtes wird die Acetal- bzw. Ketalgruppe in an sich bekannter Weise sauer, z. B. durch Einwirken verdünnter, wäßriger Salzsäure oder Schwefelsäure in Gegenwart eines insbesondere niederen Alkohols gespalten. Die überschüssige Säure wird, falls möglich, destillativ abgetrennt oder sonst mit Alkalihydroxiden oder Alkalicarbonaten neutralisiert. Der verwendete niedere Alkohol wird ebenfalls abdestilliert. Es entsteht dabei ein 1,2-Diol, d. h. eine Verbindung, bei der vicinal eine primäre und eine sekundäre Hydroxylgruppe vorliegt. Lagert man z. B. Propylenoxid an 2,2-Dimethyl-1,3-dioxolan-4-methanol an, entsteht zunächst eine Verbindung der allgemeinen Formel

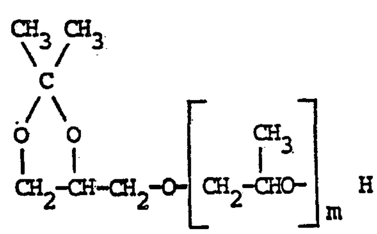

(II)

wobei m eine ganze Zahl > 1 ist. Bei der Spaltung des Ketals resultiert eine Verbindung der Formel

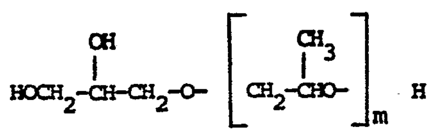 (III)

welche endständig eine primäre Hydroxylgruppe sowie zwei sekundäre Hydroxylgruppen aufweist.

Die primäre Hydroxylgruppe ist nun der gewünschten weiteren Umsetzung zugänglich. Durch die Umsetzung wird die benachbarte sekundäre Hydroxylgruppe zusätzlich sterisch behindert. Hierdurch wird die an sich schon verminderte Reaktivität der benachbarten sekundären Hydroxylgruppe noch weiter vermindert.

Die erfindungsgemäß hergestellten Produkte können direkt als Tenside verwendet werden. So ist es beispielsweise bekannt, langkettige 1,2-Diole in Form von hydrolysierten α-Olefinepoxiden mit höheren Alkylgruppen in der Kosmetik zu verwenden (A. Rutzen « Fette, Seifen, Anstrichmittel », 82, (1980), 23). Im Gegensatz zu diesen Verbindungen haben die erfindungsgemäß hergestellten Verbindungen den Vorteil der leichten Herstellbarkeit.

Die erfindungsgemäß hergestellten Verbindungen sind daneben wertvolle Ausgangsprodukte für weitere Umsetzungen, z. B. als alkoholische Komponente bei der Herstellung von Polyurethanen. So ist es beispielsweise möglich, die erfindungsgemäß erhaltenen Verbindungen mit mehrfunktionellen Isocyanaten umzusetzen und diese Umsetzung gleichzeitig zusammen mit anderen Verbindungen mit primären Hydroxylgruppen, z. B. Butandiol-1,4, durchzuführen, wobei nun die Reaktivität der erfindungsgemäß erhaltenen Verbindungen mit den Butandiolen vergleichbar ist. Hierdurch kommt es zu einem statistischen Aufbau der Blockmischpolymerisate, die besonders günstige chemische und physikalische Eigenschaften aufweisen.

Die erfindungsgemäß hergestellten Verbindungen weisen mindestens eine primäre Hydroxylgruppe auf. Häufig ist es jedoch erwünscht, daß die Polymerisate mehrere primäre Hydroxylgruppen aufweisen. Dies kann in verhältnismäßig einfacher Weise im Rahmen einer weiteren Ausbildung des erfindungsgemäßen Verfahrens dadurch geschehen, daß man das Polyadditionsprodukt des Oxirans vor der Aufspaltung der Acetal- oder Ketalgruppe mit in bezug auf die freien Hydroxylgruppen reaktionsfähigen, mindestens difunktionellen Verbindungen umsetzt.

Als reaktionsfähige, mindestens difunktionelle Verbindungen sind insbesondere Verbindungen mit Isocyanatgruppen geeignet, da die gebildeten Urethane unter den Bedingungen der sauren Spaltung der Acetale bzw. Ketale besonders stabil sind.

Vorzugsweise verwendet man als reaktive Verbindung ein Polyisocyanat der allgemeinen Formel $Q^1(NCO)_p$, in welcher p eine Zahl $\geqslant 2$ ist, $Q^1$ eine gegebenenfalls substituierte p-wertige Kohlenwasserstoffgruppe oder eine Gruppe der Formel $Q^2—Z—Q^2$, wobei $Q^2$ eine mindestens zweiwertige Kohlenwasserstoffgruppe und Z der Rest

—O—, —CO—, —S—, —$SQ^2S$— oder 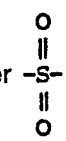 ist.

Beispiele besonders geeigneter Polyisocyanate sind 2,4- und 2,6-Toluylendiisocyanat sowie Gemische dieser Isocyanate, Diphenylmethan-4',4'-diisocyanat ; 1,3- und 1,4-Phenylendiisocyanat ; Naphthylen-1,5-diisocyanat ; 1,4-Tetramethylendiisocyanat ; 1,6-Hexamethylendiisocyanat ; Cyclohexan-1,3- und -1,4-diisocyanat ; iso-Phorondiisocyanat ; Triphenylmethan-4,4'- und -4,2-triisocyanat ; 2,4,6-Toluoltriisocyanat ; Thiophosphortris (p-isocyanatophenylester) ; Umsetzungsprodukte von Trimethylolpropan mit Toluylendiisocyanat oder mit iso-Phorondiisocyanat, Umsetzungsprodukte von Hexamethylen-1,6-diisocyanat und Wasser.

Anstelle der Isocyanate kann man auch difunktionelle oder höherfunktionelle Säurechloride, wie z. B. Adipinsäuredichlorid, Phthalsäuredichlorid, Terephthalsäuredichlorid, verwenden.

Andere geeignete Kopplungspartner sind Di- oder Tri- oder Tetrahalogensilane oder -siloxane oder die entsprechenden Alkoxysilane. Ferner geeignet sind Di- oder Polyhalogenalkane, wie z. B. Dibrommethan ; 1,2-Dibromäthan ; 1,4-Dibrombutan ; Chlorbrommethan.

Nach der Kopplung der zunächst hergestellten Polymerisate durch die vorgenannten Verknüpfungsprinzipien erfolgt die Spaltung der Acetal- bzw. Ketalgruppen durch Einwirkung von Säure. Dabei entstehen schließlich Verbindungen, z. B. folgender Struktur

(Siehe Figur Seite 5 f.)

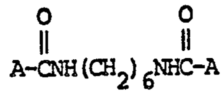

$A-CH_2-CH_2-A$

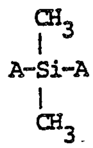

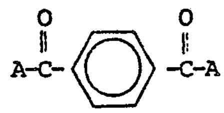

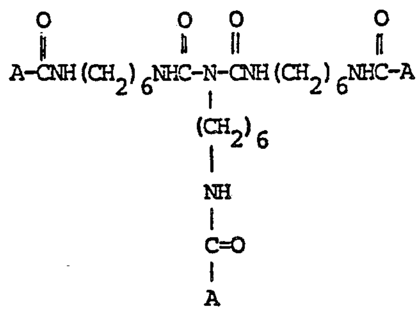

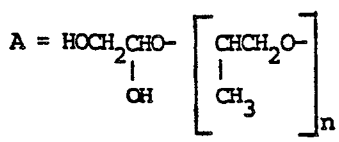

n = beliebige ganze Zahl

Die nach dieser Ausgestaltung des erfindungsgemäßen Verfahrens hergestellten Verbindungen weisen zwei oder mehr primäre Hydroxylgruppen auf und sind entsprechend reaktiv.

Das erfindungsgemäße Verfahren anhand der folgenden Beispiele noch näher erläutert.

## Beispiel 1

A) Durchführung der Polymerisation

In 264 g (2 Mol) 2,2-Dimethyl-1,3-dioxolan-4-methanol werden mit einem scherkraftreichen Rührer 12,3 g $Zn_3Co(CN)_6$ komplexiert mit Dimethylglykol als Katalysator dispergiet. Das Gemisch wird in einen Reaktor mit einem zwangsfördernden Umlaufsystem gebracht. Nach sorgfältiger Spülung mit Reinstickstoff wird der Reaktor auf 110 °C geheizt und 5 900 g (101,5 Mol) Propylenoxid so schnell zugegeben, daß die Reaktorinnentemperatur einen Wert von 120 °C und der Druck einen Wert von 3 bar nicht

überschreiten. Nach vollständiger Einleitung des Propylenoxids wird die Temperatur solange auf 120 °C gehalten, bis gleichbleibender Druck das Ende der Nachreaktion anzeigt. Nach Beendigung der Reaktion wird bei 80 bis 90 °C unter Vakuum die Entfernung des Restmonomeren vorgenommen.

Die Hydroxylzahl des erhaltenen Produktes beträgt 19,1 ($\hat{=} \bar{M}_n = 2\,940$) und der Wassergehalt 0,1 %.

B) Spaltung des Acetalringes

Der gemäß 1A) hergestellte Polyäther wird im Gewichtsverhältnis 2 : 1 : 1 mit 1 n wäßriger Salzsäure und Äthanol vermischt und für 4 h bei 80 °C unter Rückfluß erhitzt. Nach Beendigung der Reaktion werden alle flüchtigen Bestandteile im Bereich von 70 bis 80 °C bei einem Vakuum von 10 mm Hg-Säule abdestilliert ; Restmengen an Wasser werden azeotrop mit Toluol entfernt.

Die Hydroxylzahl des erhaltenen Polyäthers beträgt 55,5, der Wassergehalt liegt unter 0,01 %. Die Bestimmung des Verhältnisses von primären und sekundären Hydroxylgruppen erfolgt durch $F^{19}$-Kernresonanzspektroskopie über die Veresterung mit Trifluoressigsäure. Als prozentuale Verteilung ergeben sich zu 30 % (31 % theoret.) primäre und 70 % (69 % theoret.) sekundäre Hydroxylgruppen.

C) Anwendungstechnische Prüfung

$C_1$) Bestimmung der Reaktivität

100 g (0,034 Mol) des gemäß Beispiel 1B) erhaltenen Polyäthers werden mit 14,5 g (0,052 Mol) 4,4'-Diphenylmethandiisocyanat (MDI) intensiv vermischt. Gleichzeitig wird ein Thermoelement (Ni/Ni-Cr) in die Reaktionslösung gebracht und der Temperatur-Zeit-Verlauf der exothermen Reaktion mit Hilfe eines x,y-Schreibers aufgenommen. Die Zeit vom Reaktionsbeginn bis zum Maximum der Temperatur wird als Maß für die Reaktivität des Polyäthers betrachtet ; diese Zeit liegt bei etwa 16 bis 18 min.

Ein Gemisch aus 100 g (0,034 Mol) eines in üblicher Weise durch alkalisch katalysierte Anlagerung von Propylenoxid an Butandiol-1,4 hergestellten Polypropylenoxiddiols ($\bar{M}_n = 2\,970$), 9,9 g (0,035 Mol) MDI und 0,2 g Triäthylendiamin wird zum Vergleich wie das Gemisch mit dem erfindungsgemäßen Polyäther behandelt. Die Zeit bis zum Temperatur-Maximum beträgt 20 bis 24 min.

$C_2$) Prüfung der mechanischen Eigenschaften eines Polyurethancopolymeren

100 g (0,034 Mol) des gemäß 1B) erhaltenen Polyäthers werden mit 10 g (0,111 Mol) Butandiol-1,4, 60,7 g (0,17 Mol) eines flüssigen Polyurethanpräpolymeren auf Basis von MDI, Äthylenglykol und Carbodiimid und 0,09 g Triäthylendiamin in einem Polyäthylen-Becher intensiv verrührt und im Vakuum bei 10 mm Hg-Säule bei Raumtemperatur von eingerührten Luftblasen befreit. Der Ansatz wird 24 h bei Raumtemperatur aufbewahrt und schließlich auf 120 °C 2 h lang erhitzt. Nach Abkühlung werden 1 mm dicke Probekörper mit Hilfe einer Lederspaltmaschine geschnitten und der Zugdehnungsmessung nach DIN 53 455 unterworfen. Die Zugfestigkeit ergibt sich zu 13,6 $N/mm^2$ bei einer Bruchdehnung von 208 %.

Demgegenüber werden mit Gemischen aus 100 g (0,034 Mol) des oben beschriebenen Polypropylenoxiddiols des Standes der Technik ($\bar{M}_n = 2\,970$), 10 g (0,111 Mol) Butandiol-1,4 und 54,6 g (0,15 Mol) Polyurethanpräpolymeren und 0,08 g Triäthylendiamin nur klebrig-pastöse, zähe Produkte erhalten.

## Beispiel 2

A) Durchführung der Polymerisation

In 264 g (2 Mol) 2,2-Dimethyl-1,3-dioxolan-4-methanol werden bei 80 °C 15,6 g (0,2 Mol) Kaliummethylat im Reaktor in Lösung gebracht. Danach wird wie in Beispiel 1A) verfahren, wobei 4 360 g (75,1 Mol) Propylenoxid angelagert werden.

Nach Beendigung der Reaktion werden 90 g Wasser bei 80 °C für 0,5 h eingerührt. Anschließend werden 65 g 30 %ige Phosphorsäure im Verlauf von 20 min zugegeben ; es wird 0,25 h lang gerührt und mit $NaH_2PO_4$ auf pH 7 eingestellt. Danach wird das Wasser bei 80 bis 90 °C in einem Vakuum von 10 mm Hg-Säule abdestilliert und das Produkt mit 10 g eines Filterhilfsmittels auf Silikatbasis abfiltriert.

Die Hydroxylzahl des erhaltenen Produktes beträgt 27,9 ($\bar{M}_n = 2\,010$) und der Wassergehalt 0,15 %.

B) Spaltung des Acetalringes

Der gemäß 2A) hergestellte Polyäther wird im Gewichtsverhältnis 1 : 1 : 1 mit 1 n wäßriger Schwefelsäure und Äthanol vermischt und 5 h lang bei 80 °C unter Rückfluß erhitzt. Nach Beendigung der Reaktion wird das noch heiße Reaktionsgemisch mit 50 %iger wäßriger Natronlauge neutralisiert. Anschließend werden alle flüchtigen Bestandteile im Bereich von 70 bis 80 °C bei einem Vakuum von 10 mm Hg-Säule abdestilliert. Das anfallende $Na_2SO_4$ läßt sich mit Hilfe eines Filterhilfsmittels auf Silikatbasis in der Wärme vollständig abscheiden.

Die Hydroxylzahl des erhaltenen Polyäthers beträgt 76,3, der Wassergehalt liegt unter 0,1 %. Die

Bestimmung des Verhältnisses von primären zu sekundären Hydroxylgruppen ergibt eine Verteilung von 29,5 % (31 % theoret.) primären und 70,5 % (69 % theoret.) sekundären Hydroxylgruppen.

C) Anwendungstechnische Prüfung

$C_1$) Bestimmung der Reaktivität eines Polyäther-Diisocyanat-Gemisches

100 g (0,045 Mol) des gemäß Beispiel 2B) erhaltenen Polyäthers werden mit 20,0 g (0,072 Mol) MDI und 0,2 g Triäthylendiamin vermischt und gemäß Beispiel 1$C_1$) aus dem Temperatur-Zeit-Verlauf ein Temperatur-Maximum nach 12 bis 14 min ermittelt.

Für eine Mischung aus 100 g (0,049 Mol) eines Polypropylenoxiddiols mit $\bar{M}_n$ = 2 020, 14,5 g (0,052 Mol) MDI und 0,2 g Triäthylendiamin wird im Vergleichsversuch eine Zeit bis zum Temperatur-Maximum von 22 bis 24 min ermittelt.

$C_2$) Prüfung der mechanischen Eigenschaften eines Polyurethancopolymeren

Ein Gemisch aus 100 g (0,045 Mol) des gemäß 2B) erhaltenen Polyäthers, 10 g (0,111 Mol) Butandiol-1,4 und 67,7 g (0,19 Mol) eines flüssigen Polyurethanpräpolymeren auf Basis von MDI, Äthylenglykol und Carbodiimid und 0,08 g Triäthylendiamin wird gemäß Beispiel 1$C_2$) behandelt. Die Zugfestigkeit der Probekörper ergibt sich zu 14,9 N/mm$^2$ und die Bruchdehnung zu 181 %.

Demgegenüber werden mit Gemischen aus 100 g (0,049 Mol) eines Polypropylenoxiddiols des Standes der Technik ($\bar{M}_n$ = 2 020), 10 g (0,111 Mol) Butandiol-1,4 und 60,7 g (0,17 Mol) des Polyurethanpräpolymeren und 0,08 g Triäthylendiamin nur klebrig-pastöse Produkte erhalten.

## Beispiel 3

A) Durchführung der Polymerisation gemäß Beispiel 1A)

B) Intermolekulare Verknüpfung

In 2 940 g (1 Mol) des unter 3A) erhaltenen Produktes werden bei 120 °C unter einem Stickstoffstrom in Gegenwart von 3 g Dibutylzinndilaurat und 9 g Triäthylendiamin 116,5 g (0,525 Mol) Isophorondiisocyanat innerhalb von 1 h zugetropft. Nach beendeter Zugabe wird 2 h lang bei 120 °C eine Nachreaktion zugelassen. Die über eine Diäthylamin-Anlagerung ermittelte Isocyanat-Zahl beträgt 0,05 %, die Hydroxylzahl 0,7.

C) Spaltung des Ketals

Der gemäß 3B) gekoppelte Polyäther wird im Gewichtsverhältnis 2 : 1 : 1 mit 1 n wäßriger Salzsäure und Äthanol vermischt und 4 h lang bei 80 °C unter Rückfluß erhitzt. Nach Beendigung der Reaktion werden alle flüchtigen Bestandteile im Beriech von 70 bis 80 °C bei einem Vakuum von 10 mm Hg-Säule abdestilliert ; Restmengen an Wasser werden azeotrop mit Toluol entfernt.

Die Hydroxylzahl des erhaltenen Polyäthers beträgt 41,2, was bei einer angenommenen Funktionalität von 4 einem Molekulargewicht von 5 450 entspricht.

D) Anwendungstechnische Prüfung

$D_1$) Bestimmung der Reaktivität

100 g (ca. 0,018 Mol) des gemäß 3C) erhaltenen Polyäthers werden mit 10,6 g (0,038 Mol) 4,4'-Diphenylmethandiisocyanat (MDI) und 0,2 g Triäthylendiamin intensiv vermischt. Gleichzeitig wird ein Thermoelement (Ni/Ni-Cr) in die Reaktionslösung gebracht und der Temperatur-Zeit-Verlauf der exothermen Reaktion mit Hilfe eines x,y-Schreibers aufgenommen. Die Zeit vom Reaktionsbeginn bis zum Maximum der Temperatur wird als Maß für die Reaktivität des Polyäthers betrachtet, diese Zeit liegt bei etwa 15 bis 17 min.

Zum Vergleich werden 100 g (ca. 0,019 Mol) eines Polyäthers, der durch Anlagerung von Propylenglykol an Butandiol-1,4 mit $Zn_3[Co(CN)_6]$, komplexiert mit Dimethylglykol, als Katalysator hergestellt worden ist und ein Molekulargewicht von 5 250 besitzt, 5,60 g (0,02 Mol) MDI und 0,2 g Triäthylendiamin wie das Gemisch, welches den erfindungsgemäßen Polyäther enthält, behandelt. Die Zeit bis zum Temperatur-Maximum beträgt 28 bis 30 min.

$D_2$) Prüfung der mechanischen Eigenschaften eines Polyurethancopolymeren

100 g (ca. 0,019 Mol) des gemäß 3C) erhaltenen Polyäthers werden mit 10 g (0,111 Mol) Butandiol-1,4, 48,9 g (0,137 Mol) eines flüssigen Polyurethanpräpolymeren auf Basis von MDI, Äthylenglykol und

Carbodiimid und 0,2 g Triäthylendiamin in einem Polyäthylen-Becher intensiv verrührt und im Vakuum bei 10 mm Hg-Säule bei Raumtemperatur von eingerührten Luftblasen befreit. Der Ansatz wird 24 h bei Raumtemperatur aufbewahrt und schließlich auf 120 °C 2 h erhitzt. Nach Abkühlung werden 1 mm dicke Probekörper mit Hilfe einer Lederspaltmaschine geschnitten und der Zugdehnungsmessung nach DIN 53 455 unterworfen. Die Zugfestigkeit ergibt sich zu 10,5 N/mm² bei einer Bruchdehnung von 540 %.

Demgegenüber werden mit Gemischen aus 100 g (ca. 0,019 Mol) des oben beschriebenen Polypropylenoxiddiols des Standes der Technik, 10 g (0,111 Mol) Butandiol-1,4 und 49,3 g (0,137 Mol) Polyurethanpräpolymeren und 0,2 g Triäthylendiamin nur klebrig-pastöse, zähe Produkte erhalten.

## Beispiel 4

A) Durchführung der Polymerisation

In 132 g (ca. 1 Mol) 2,2-Dimethyl-1,3-dioxolan-4-methanol werden bei 80 °C 78 g (0,1 Mol) Kaliummethylat in Lösung gebracht. Danach wird wie in Beispiel 3A) verfahren, wobei 933 g (ca. 16,1 Mol) Propylenoxid angelagert werden.

Nach Beendigung der Reaktion wird bei 80 bis 90 °C unter Vakuum die Entfernung des Restmonomeren vorgenommen. Anschließend werden zunächst 75 g Wasser bei 80 °C für 0,5 h und dann 10 g 30 %ige Phosphorsäure im Verlauf von 20 min zugegeben ; es wird 0,25 h lang gerührt und mit $NaH_2PO_4$ auf pH 7 eingestellt. Danach wird das Wasser bei 80 bis 90 °C in einem Vakuum von 10 mm Hg-Säule abdestilliert und das Produkt mit 10 g eines Filterhilfsmittels auf Silikatbasis abfiltriert.

Die Hydroxylzahl des erhaltenen Produktes beträgt 56,3 ; was bei einer angenommenen Funktionalität von 1 einem Molekulargewicht von 996 entspricht.

B) Kopplung eines mit einem Acetal gestarteten Polypropylenoxides mit einem Diisocyanat

In 249 g (ca. 0,25 Mol) eines mit 2,2-Dimethyl-1,3-dioxolan-4-methanol gestarteten Polypropylenoxides werden bei 120 °C unter einem Stickstoffstrom innerhalb von 0,5 h 21 g (0,125 Mol) Hexamethylendiisocyanat zugetropft. Nach beendeter Zugabe wird 2 h lang bei 120 °C eine Nachreaktion zugelassen. Die über eine Diäthylamin-Anlagerung ermittelte Isocyanat-Zahl beträgt 0,05 %.

C) Spaltung des Acetalringes

Der gemäß 4B) gekoppelte Polyäther wird im Gewichtsverhältnis 2 : 1 : 1 mit 1 n wäßriger Salzsäure und Äthanol vermischt und 4 h lang bei 80 °C unter Rückfluß erhitzt. Nach Beendigung der Reaktion werden alle flüchtigen Bestandteile im Bereich von 70 bis 80 °C bei einem Vakuum von 10 mm Hg-Säule abdestilliert ; Restmengen an Wasser werden azeotrop mit Toluol entfernt.

Die Hydroxylzahl des erhaltenen Polyäthers beträgt 104,8, was bei einer angenommenen Funktionalität von 4 einem Molekulargewicht von 2 140 entspricht. Die Bestimmung des Verhältnisses von primären und sekundären Hydroxylgruppen ergibt nach der $F^{19}$-Kernresonanzspektroskopie 48,2 % (50 % theoret.) primäre und 51,8 % (50 % theoret.) sekundäre Hydroxylgruppen.

D) Anwendungstechnische Prüfung

$D_1$) Bestimmung der Reaktivität eines Polyäther-Diisocyanat-Gemisches

104 g (ca. 0,05 Mol) des gemäß Beispiel 4C) erhaltenen Polyäthers werden mit 29,4 g (0,105 Mol) MDI und 0,2 g Triäthylendiamin vermischt und gemäß Beispiel $1C_1$) aus dem Temperatur-Zeit-Verlauf ein Temperatur-Maximum nach 8 bis 10 min ermittelt.

Für eine Mischung aus 108 g (ca. 0,05 Mol) eines Polypropylenoxiddiols des Standes der Technik, 29,4 g (0,052 5 Mol) MDI und 0,2 g Triäthylendiamin wird im Vergleichsversuch eine Zeit bis zum Temperatur-Maximum von 22 bis 24 min ermittelt.

$D_2$) Prüfung der mechanischen Eigenschaften eines Polyurethancopolymeren

Ein Gemisch aus 104 g (0,05 Mol) des gemäß 4C) erhaltenen Polyäthers, 10,4 g (0,111 Mol) Butandiol-1,4 und 60,8 g (0,169 Mol) eines flüssigen Polyurethanpräpolymeren auf Basis von MDI, Äthylenglykol und Carbodiimid und 0,05 g Triäthylendiamin wird gemäß Beispiel $3C_2$) behandelt. Die Zugfestigkeit der Probekörper ergibt sich zu 18,1 N/mm² und die Bruchdehnung zu 230 %.

## Beispiel 5

A) Durchführung der Polymerisation

In 348 g (ca. 2 Mol) 2,2-Dimethyl-5-hydroxymethyl-5-äthyl-1,3-dioxan werden bei 80 °C 15,6 g (ca. 0,2 Mol) Kaliummethylat in Lösung gebracht. Danach wird wie in Beispiel 1A) verfahren, wobei 4 360 g (ca. 75,1 Mol) Propylenoxid angelagert werden.

Nach Beendigung der Reaktion werden 90 g Wasser bei 80 °C für 0,5 h eingerührt. Anschließend werden 65 g 30 %ige Phosphorsäure im Verlauf von 20 min zugegeben, es wird 0,25 h lang gerührt und mit $Na_2HPO_4$ auf pH 7 eingestellt. Danach wird das Wasser bei 80 bis 90 °C in einem Vakuum von 10 mm Hg-Säule abdestilliert und das produkt mit 10 g eines Filterhilfsmittels auf Silikatbasis abfiltriert.

Die Hydroxylzahl des erhaltenen Produktes beträgt 27,9, was unter Annahme einer Funktionalität von 1 einem Molekulargewicht von 2 010 entspricht.

B) Intermolekulare Verknüpfung

2 010 g (ca. 1 Mol) des unter 5A) erhaltenen Polypropylenoxids werden unter Reinstickstoff auf 80 °C erwärmt. Sodann werden 96,1 g (0,525 Mol) Adipinsäuredichlorid zugegeben und die Mischung für 3 h bei 120 °C zur Reaktion gebracht, wobei der entstehende Chlorwasserstoff abdestilliert wird.

Die Hydroxylzahl des entstandenen Produktes beträgt 2,4.

C) Spaltung des Ketals

Das unter B) erhaltene Produkt wird im Gewichtsverhältnis 2 : 1 mit 50 %iger wäßriger Essigsäure für 6 h auf 80 °C erwärmt und danach die flüchtigen Anteile bei 80 bis 90 °C bei einem Vakuum von 10 mm Hg-Säule abdestilliert.

Die Hydroxylzahl des farblosen, klaren Produktes beträgt 55,7, was bei einer angenommenen Funktionalität von 4 einem Molekulargewicht von 4 030 entspricht.

D) Anwendungstechnische Prüfung

$D_1$) Bestimmung der Reaktivität eines Polyäther-Diisocyanat-Gemisches

100 g (ca. 0,025 Mol) des gemäß 5C) erhaltenen Polyäthers werden mit 14,7 g (0,0525 Mol) MDI und 0,2 g Triäthylendiamin vermischt und gemäß Beispiel $1C_1$) aus dem Temperatur-Zeit-Verlauf ein Temperatur-Maximum nach 11 bis 14 min ermittelt.

Für eine Mischung aus 100 g (ca. 0,026 Mol) eines Polypropylenoxiddiols des Standes der Technik, 15,3 g (0,0273 Mol) MDI und 0,2 g Triäthylendiamin wird im Vergleich eine Zeit bis zum Temperatur-Maximum von 26 bis 28 min ermittelt.

$D_2$) Prüfung der mechanischen Eigenschaften eines Polyurethancopolymeren

Ein Gemisch aus 100 g (ca. 0,025 Mol) des gemäß 5C) erhaltenen Polyäthers, 10 g (0,111 Mol) Butandiol-1,4 und 51,0 g (0,143 Mol) eines flüssigen Polyurethanpräpolymeren auf Basis von MDI, Äthylenglykol und Carbodiimid und 0,2 g Triäthylendiamin wird gemäß Beispiel $1D_2$) behandelt. Die Zugfestigkeit der Probekörper ergibt sich zu 15,2 $N/mm^2$ und die Bruchdehnung zu 420 %.

Beispiel 6

A) Intermolekulare Verknüpfung eines mit einem Acetal gestarteten Polypropylenoxides mit einem Diisocyanat

In 249 g (0,25 Mol) eines mit 2,2-Dimethyl-1,3-dioxolan-4-methanol gestarteten Polypropylenoxides werden bei 120 °C unter einem Stickstoffstrom innerhalb von 0,5 h 21 g (0,125 Mol) Hexamethylendiisocyanat zugetropft. Nach beendeter Zugabe wird 2 h lang bei 120 °C eine Nachreaktion zugelassen. Die über eine Diäthylamin-Anlagerung ermittelte Isocyanat-Zahl beträgt 0,05 %.

B) Spaltung des Acetalringes

Der gemäß 6A) intermolekular verknüpfte Polyäther wird im Gewichtsverhältnis 2 : 1 : 1 mit 1 n wäßriger Salzsäure und Äthanol vermischt und 4 h lang bei 80 °C unter Rückfluß erhitzt. Nach Beendigung der Reaktion werden alle flüchtigen Bestandteile im Bereich bon 70 bis 80 °C bei einem Vakuum von 10 mm Hg-Säule abdestilliert ; Restmengen an Wasser werden azeotrop mit Toluol entfernt.

Die Hydroxylzahl des erhaltenen Polyäthers beträgt 104,8, der Wassergehalt liegt unter 0,01 %. Die Bestimmung des Verhältnisses von primären und sekundären Hydroxylgruppen ergibt nach der $F^{19}$-Kernresonanzspektroskopie 48,2 % (50 % theoret.) primäre und 51,8 % (50 % theoret.) sekundäre Hydroxylgruppen.

C) Anwendungstechnische Prüfung

$C_1$) Bestimmung der Reaktivität eines Polyäther-Diisocyanat-Gemisches

104 g (0,05 Mol) des gemäß Beispiel 6B) erhaltenen Polyäthers werden mit 29,4 g (0,052 5 Mol) MDI

und 0,2 g Triäthylendiamin vermischt und gemäß Beispiel $1C_1$) aus dem Temperatur-Zeit-Verlauf ein Temperatur-Maximum nach 8 bis min ermittelt.

Für eine Mischung aus 108 g (0,05 Mol) eines Polypropylenoxiddiols des Standes der Technik, 29,4 g (0,052 5 Mol) MDI und 0,2 g Triäthylendiamin wird im Vergleichsversuch eine Zeit bis zum Temperatur-Maximum von 22 bis 24 min ermittelt.

$C_2$) Prüfung der mechanischen Eigenschaften eines Polyurethancopolymeren

Ein Gemisch aus 104 g (0,05 Mol) des gemäß 6B) erhaltenen Polyäthers, 10,4 g (0,111 Mol) Butandiol-1,4 und 60,8 g (0,169 Mol) eines flüssigen Polyurethanpräpolymeren auf Basis von MDI, Äthylenglykol und Carbodiimid und 0,05 g Triäthylendiamin wird gemäß Beispiel $1C_2$) behandelt. Die Zugfestigkeit der Probekörper ergibt sich zu 18,1 $N/mm^2$ und die Bruchdehnung zu 230 %.

**Ansprüche**

1. Verfahren zur Herstellung von Derivaten von Polymerisaten der Struktureinheit

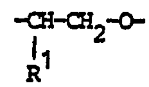

wobei

$R^1$ eine gegebenenfalls halogenierte Kohlenwasserstoffgruppe mit 1 bis 30 Kohlenstoffatomen oder die Gruppe $—CH_2—O—R^2$, in der

$R^2$ eine Alkyl- oder Alkenylgruppe ist, bedeutet, mit mindestens einer endständigen primären Hydroxylgruppe, dadurch gekennzeichnet, daß man ein Oxiran der allgemeinen Formel

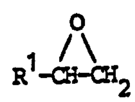

wobei $R^1$ die obengenannte Bedeutung hat, in an sich bekannter Weise an einen mindestens drei Hydroxylgruppen aufweisenden mehrwertigen Alkohol, von dem mindestens zwei Hydroxylgruppen in Form eines Acetals oder Ketals vorliegen und mindestens eine dieser beiden Hydroxylgruppen eine primäre Hydroxylgruppe ist, anlagert und die Acetal- oder Ketalgruppe nach der Anlagerung in an sich bekannter Weise durch Einwirkung von Säure spaltet.

2. Verfahren nach Anspruch 1, dadurch gekennzeichnet, daß man als Oxiran Propylenoxid verwendet.

3. Verfahren nach Anspruch 1 oder 2, dadurch gekennzeichnet, daß man das Oxiran an 2,2-Dimethyl-1,3-dioxolan-4-methanol anlagert.

4. Weitere Ausbildung des Verfahrens nach einem oder mehreren der vorhergehenden Ansprüche, dadurch gekennzeichnet, daß man das Polyadditionsprodukt des Oxirans vor der Aufspaltung der Acetal- oder Ketalgruppe mit in bezug auf die freien Hydroxylgruppen reaktionsfähigen, mindestens difunktionellen Verbindungen umsetzt.

5. Verfahren nach Anspruch 4, dadurch gekennzeichnet, daß man als reaktive Verbindung ein Polyisocyanat der allgemeinen Formel $Q^1(NCO)_p$, in welcher p eine Zahl $\geqslant 2$ ist, $Q^1$ eine gegebenenfalls substituierte p-wertige Kohlenwasserstoffgruppe oder eine Gruppe der Formel $Q^2—Z—Q^2$, wobei $Q^2$ eine mindestens zweiwertige Kohlenwasserstoffgruppe und Z der Rest

—O—, —CO—, —S—, $—SQ^2S—$ oder 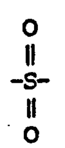

ist, verwendet.

**Claims**

1. Process for the preparation of derivatives of polymers having the structural unit

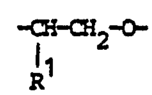

wherein

$R^1$ denotes an optionally halogenated hydrocarbon group with 1 to 30 carbon atoms or the group $—CH_2—O—R^2$, in which

$R^2$ is an alkyl to alkenyl group, and at least one terminal primary hydroxyl group, characterised in that an oxirane of the general formula

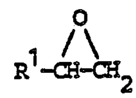

wherein $R^1$ has the abovementioned meaning, is added, in a manner which is know per se, onto a polyhydric alcohol which contains at least three hydroxyl groups, at least two hydroxyl groups of which are in the form of an acetal or ketal, and at least one of these two hydroxyl groups being a primary hydroxyl group, and, after the addition reaction, the acetal or ketal group is split by the action of acid in a manner which is known *per se.*

2. Process according to Claim 1, characterised in that propylene oxide is used as the oxirane.

3. Process according to Claim 1 or 2, characterised in that the oxirane is added onto 2,2-dimethyl-1,3-dioxolane-4-methanol.

4. A further embodiment of the process according to one or more of the preceding claims, characterised in that the polyaddition product of the oxirane is reacted with compounds which are at least difunctional and are reactive in respect of the free hydroxyl groups, before the acetal or ketal group is split.

5. Process according to Claim 4, characterised in that a polyisocyanate of the general formula $Q^1(NCO)_p$, in which p is a number $\geqslant 2$ and $Q^1$ is an optionally substituted p-valent hydrocarbon group or a group of the formula $Q^2—Z—Q^2$, wherein $Q^2$ is a hydrocarbon group which is at least divalent and Z is the radical

—O—, —CO—, —S—, $—SQ^2S—$ or 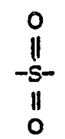

is used as the reactive compound.

**Revendications**

1. Procédé pour la préparation de dérivés de polymères ayant comme motif structural

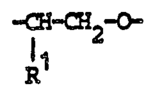

où

$R^1$ est un groupe hydrocarboné éventuellement halogéné à 1 à 30 atomes de carbone, ou le groupe $—CH—O—R^2$, où

$R^2$ est un groupe alkyle ou alcényle, ayant au moins un groupe hydroxyle primaire en position terminale, caractérisé en ce qu'on fixe un oxiranne de formule générale

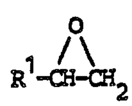

où $R^1$ a la signification ci-dessus, d'une manière connue en soi, sur un polyalcool présentant au moins trois groupes hydroxyle, dont au moins deux groupes hydroxyle se présentent sous la forme d'un acétal ou d'un cétal, et au moins l'un de ces deux groupes hydroxyle est un groupe hydroxyle primaire, et qu'on élimine sous l'action d'un acide, d'une manière connue en soi, le groupe acétal ou cétal après la fixation.

2. Procédé selon la revendication 1, caractérisé en ce qu'on utilise en tant qu'oxiranne de l'oxyde de propylène.

3. Procédé selon l'une quelconque des revendications 1 ou 2, caractérisé en ce qu'on fixe l'oxiranne sur le 2,2-diméthyl-1,3-dioxolanne-4-méthanol.

4. Autre forme de réalisation du procédé selon l'une ou plusieurs des revendications 1 à 3, caractérisée en ce qu'on fait réagir le produit de polyaddition de l'oxiranne, avant dissociation du groupe acétal ou cétal, sur des composés au moins bifonctionnels, réactifs vis-à-vis des groupes hydroxyle libre.

5. Procédé selon la revendication 4, caractérisé en ce qu'on utilise en tant que composé réactif un polyisocyanate de formule générale $Q^1(NCO)_p$, où p est un nombre $\geqslant 2$, $Q^1$ est un groupe hydrocarboné p-valent éventuellement substitué ou un groupe de formule $Q^2—Z—Q^2$, où $Q^2$ est un groupe hydrocarboné au moins bivalent et Z est le radical

$$—O—,\ —CO—,\ —S—,\ —SQ^2S—\ \text{ou}\ -\overset{\overset{O}{\|}}{\underset{\underset{O}{\|}}{S}}-$$